# EUROPEAN PATENT SPECIFICATION

(11) **EP 3 954 197 B1**
(45) Date of publication and mention of the grant of the patent: **25.01.2023**
(21) Application number: 20212385.7
(22) Date of filing: 08.12.2020
(51) Int. Cl.: A01G 3/037, A01G 3/025, B26D 7/10, B26D 7/00

(54) **BLADE HEATABLE ELECTRIC SCISSORS AND CONTROL METHOD**
ELEKTRISCHE SCHERE MIT ERWÄRMBARER KLINGE UND STEUERUNGSVERFAHREN
CISEAUX ÉLECTRIQUES CHAUFFANT À LAME ET PROCÉDÉ DE COMMANDE

(30) Priority: 10.08.2020 CN 202010797280
(43) Date of publication of application: 16.02.2022
(73) Proprietor: Dongguan Zhenghong Technology Service Co., Ltd., Dongguan City, Guangdong (CN)
(72) Inventor: MA, Xianpeng, Dongguan City, Guangdong Province (CN)
(74) Representative: Cabinet Chaillot

(56) References cited:
- CN-A- 109 429 761
- KR-A- 20140 036 501

## Description

### FIELD

The present invention relates to a gardening tool, in particular to an electric scissors technology, and specifically discloses blade heatable electric scissors and a control method.

### BACKGROUND

Through reasonable clip of branches of trees, over-vigorous growth of plants may be inhibited, and tree vigour is balanced. Through heavy clip of aged tree branches, the effects of regeneration and rejuvenation may be achieved as well, the plants may restore exuberant vitality, a life span of the plants is prolonged, long-term and stable landscape effects are maintained, a relationship between growth and fruiting is adjusted, and the ornamental effect of flowers and fruits are improved. Growth is a basis of fruiting of flowering and fruiting type ornamental plants, and fruiting also influences growth of the trees in turn.

Wounds left on the clipped branches need to be disinfected by applying a healing agent, such that the trees are prevented from being infected with bacteria and getting rotten. But the healing agent needs to be applied on the branches one by one, which is slow and laborious and severely influences the clip efficiency, and therefore, it is necessary to develop a high-temperature disinfection method and tool with a clip-and-disinfect function, so as to improve the clip efficiency.

Relevant prior art is KR 2014 0036501 A and CN 109 429 761 A.

### SUMMARY

An objective of the present invention is to overcome the problem that in the prior art, wounds left on clipped branches need to be disinfected by applying a healing agent, such that the trees are prevented from being infected with bacteria and getting rotten, but the healing agent the healing agent needs to be applied on the branches one by one, which is slow and laborious and severely influences the clip efficiency, and provides blade heatable electric scissors and a control method, a blade is heated to a sufficiently-high temperature upon shearing, and therefore the shearing and disinfection efficiency are improved through a clip-and-disinfect function.

In order to achieve the above objective, the present invention provides the following technical solution:
the blade heatable electric scissors are designed and manufactured. The electric scissors include a scissors body, a first blade is arranged at a front end of the scissors body, and a heating sheet and a temperature sensor are arranged at the first blade; the heating sheet and the temperature sensor are connected to a heating sheet drive circuit and a blade temperature detection circuit each through a conduction cable respectively, and a drive end PWM1H of the heating sheet drive circuit is connected to a pin of a single chip microcomputer U1; and an output end TEM of the blade temperature detection circuit is connected to another pin of the single chip microcomputer U1.

Two leads in the conduction cable are connected to two electrodes of the temperature sensor, one, connected to an upper end of the temperature sensor, of the leads is finally connected to a resistor R6, a junction serves the output end TEM of the blade temperature detection circuit, and the other one, connected to a lower end of the temperature sensor, of the leads is finally connected to a ground wire of the blade temperature detection circuit.

The two leads in the conduction cable are connected to two electrodes of the heating sheet, one, connected to an upper end of the heating sheet, of the leads is finally connected to a VCC of a power circuit, and the other one, connected to a lower end of the heating sheet, of the leads is finally connected to a drain electrode of a field effect transistor Q1 in the heating sheet drive circuit.

The front end of the scissors body is provided with an indicator light, the indicator light is connected to one output pin of the single chip microcomputer U1 through a resistor R9.

One input pin of the single chip microcomputer U1 is connected to a potentiometer

VER1 in a blade heating temperature adjustment circuit.

The control method of the blade heatable electric scissors is implemented. The control method includes the following

steps:
step 1, firstly, arranging a heating sheet and a temperature sensor on a first blade, rotating around a scissors shaft, at a front end of a scissors body of the electric scissors; embedding the heating sheet tightly into a blade body of the first blade; and arranging the temperature sensor near the heating sheet so as to be tightly attached to the blade body; and
arranging a power circuit, wherein the power circuit provides three types of power for the electric scissors, a first type is DC3V or DC5V power for operation of a single chip microcomputer U1, a blade heating temperature adjustment circuit, a heating sheet drive circuit and a blade temperature detection circuit; a second type is DC12V power for operation of a shearing electric motor in the scissors body; and a third type is a VCC of DC28-60V power for operation of the heating sheet;
step 2, re-arranging the single chip microcomputer U1; and loading a starting preheating program module, a blade temperature detection program module, a shearing time setting program module, a PWM drive program module, an operation state indicator light program module, a temperature over-limit alarm program module, a reference temperature correction program module and a shearing early-heating program module in a program storer of the single chip microcomputer U1, wherein each program module may be loaded and run by a processor;
step 3, then connecting the heating sheet and the temperature sensor to the heating sheet drive circuit and the blade temperature detection circuit each through a conduction cable respectively, wherein a drive end PWM1H of the heating sheet drive circuit is connected to one output pin of the single chip microcomputer U1; and an output end TEM of the blade temperature detection circuit is connected to one input pin of the single chip microcomputer U1;
step 4, next arranging the blade heating temperature adjustment circuit, wherein a slide point of a potentiometer VER1 in the circuit is connected to one input pin of the single chip microcomputer U1;
step 5, switching on a starting switch on the scissors body when shearing is ready to start, running the starting preheating program module, the blade temperature detection program module, the shearing time setting program module and the operation state indicator light program module by the single chip microcomputer U1, at this moment, heating the first blade to a preheated state, detecting a preheated temperature by the blade temperature detection program module, and determining whether shearing may be performed according to a light-up state of the indicator light;
step 6, pulling a trigger when shearing is performed to trigger a first pin ED of the single chip microcomputer U1, running the shearing early-heating program module by the single chip microcomputer U1, rapidly heating the first blade to a shearing high temperature state, ejecting a shearing drive rod under drive of the shearing electric motor according to control of the shearing time setting program module, driving the first blade to perform shearing by a shearing drive shaft, and after shearing is completed, stopping the shearing high temperature state of the first blade by the shearing time setting program module and returning to a preheated state;
step 7, when a reference of the preheated state and a reference of the shearing high temperature state need to be adjusted in a use process due to a geographic latitude difference, an environment temperature difference and a sheared material difference, rotating the potentiometer VER1 in the blade heating temperature adjustment circuit, running the reference temperature correction program module, and raising or lowering the reference; and
step 8, under the condition that a heating temperature exceeds a maximum limit during a use process, starting the temperature over-limit alarm program module, rapidly flashing the indicator light and stopping operation of the electric scissors.

The drive end PWM1H of the heating sheet drive circuit is connected to one output pin of the single chip microcomputer U1, the pin outputs a PWM drive waveform generated by the PWM drive program module, the waveform varies in duty ratio, a field effect transistor Q1 varies in conduction degree accordingly, and the heating sheet varies in heated degree.

The output end TEM of the blade temperature detection circuit is connected to one input pin of the single chip microcomputer U1, the pin inputs a voltage induced by an upper end of the temperature sensor, the first blade varies in temperature, the voltage induced by the upper end of the temperature sensor varies accordingly, and the voltage is converted into a digital signal through an A/D converter inside the pin and the blade temperature detection program module for control.

The blade heating temperature adjustment circuit is connected to the input pin of the single chip microcomputer U1, it is the pin that inputs a potential of a midpoint of the potentiometer VER1, and the potential is converted into a digital signal through the A/D converter inside the pin and the reference temperature correction program module for reference temperature adjustment.

When the VCC voltage of the DC28-60V power for the operation of the heating sheet varies, and the preheated temperature is set during initial starting, the VCC voltage of the power may be indirectly detected through the starting preheating program module and the blade temperature detection program module, and the PWM drive program module is started to correct a duty ratio of a PWM signal.

Compared with the prior art, the present invention arranges the heating sheet on the shearing blade, such that a cut may be subjected to high-temperature disinfection while a branch is clipped. Meanwhile, the present invention may adjust a preheating temperature reference and a shearing high temperature reference according to a latitude difference, an environment temperature difference, and a variety difference of sheared plants. According to the present invention, the blade is further set to be heated to a high temperature upon shearing, thereby greatly saving on electric energy consumption, and disinfection and sterilization operation on the cut is completed as well while a shearing action is completed by the present invention, thereby greatly improving efficiency.

### BRIEF DESCRIPTION OF THE DRAWINGS

Fig. 1 is a schematic overall structural diagram of a first embodiment of blade heatable electric scissors and a control method of the present invention;
Fig. 2 is a schematic diagram during branch shearing by a heating blade of the blade heatable electric scissors and the control method of the present invention;
Fig. 3 is a schematic circuit diagram of a control circuit of the blade heatable electric scissors and the control method of the present invention; and
Fig. 4 is a block diagram of a program module loaded in a program storer in a single chip microcomputer U1 in the blade heatable electric scissors and the control method of the present invention.

### DETAILED DESCRIPTION OF THE EMBODIMENTS

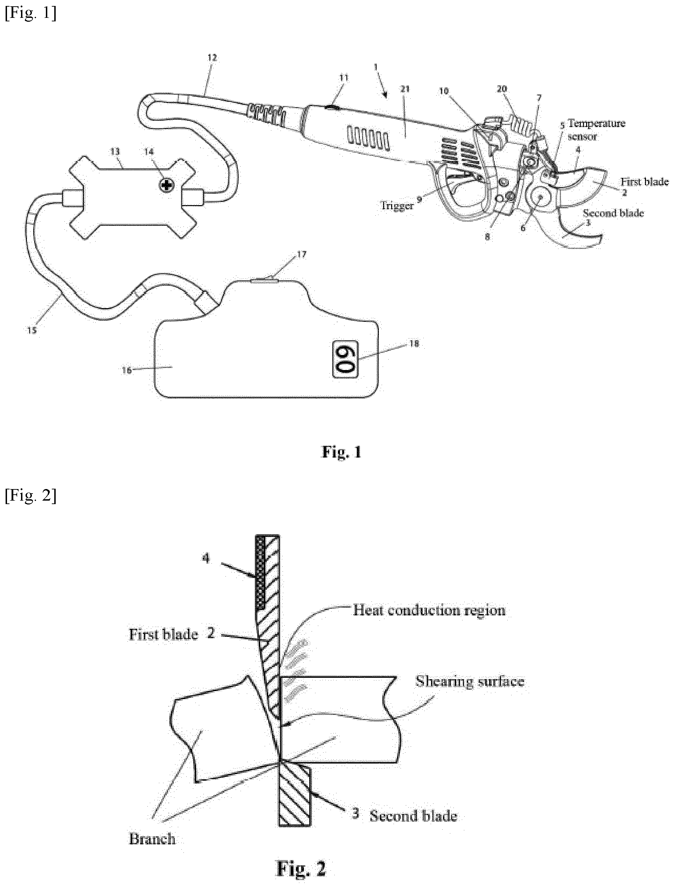

As shown in Fig. 1, a first embodiment of the present invention shows a separation form of an electric scissors body 21, a controller 13 and a battery 16, the electric scissors body 21 is connected to the controller 13 through a control cable 12, and the controller 13 is connected to the battery 16 through a power cable 15.

As shown in a second embodiment of the present invention, a body and a controller are combined into a whole, and a battery is separated. In this embodiment, part of contents of the controller is migrated into an electric scissors body 21, such that the electric scissors body 21 is slightly greater than that in the first embodiment, but use is not affected though.

In a third embodiment, a power cable may be connected to rectification power only if the mains available for power can be connected or the power cable is long enough.

The technical solutions of the present invention will be described below clearly and comprehensively in conjunction with an accompanying drawing in the first embodiment of the present invention. Apparently, embodiments described are merely some of, rather than all of, the embodiments of the present invention. Based on the embodiments of the present invention, all the other embodiments obtained by those of ordinary skill in the art without making creative efforts fall within the scope of protection of the present invention.

Figs. 1 to 4 show a first embodiment of the present invention:
blade heatable electric scissors 1 include a scissors body 21, a first blade 2 is arranged at a front end of the scissors body 21, and a heating sheet 4 and a temperature sensor 5 are arranged on the first blade 2; the heating sheet 4 and the temperature sensor 5 are connected to a heating sheet drive circuit and a blade temperature detection circuit through a conduction cable 20 respectively, and a drive end PWM1H of the heating sheet drive circuit is connected to one pin of a single chip microcomputer U1; and an output end TEM of the blade temperature detection circuit is connected to another pin of the single chip microcomputer U1.

Two leads in the conduction cable 20 are connected to two electrodes of the temperature sensor 5, one, connected to an upper end of the temperature sensor 5, of the leads is finally connected to a resistor R6, a junction serves the output end TEM of the blade temperature detection circuit, and the other one, connected to a lower end of the temperature sensor 5, of the leads is finally connected to a ground wire of the blade temperature detection circuit.

The two leads in the conduction cable 20 are connected to two electrodes of the heating sheet 4, one, connected to an upper end of the heating sheet 4, of the leads is finally connected to a VCC of a power circuit, and the other one, connected to a lower end of the heating sheet 4, of the leads is finally connected to a drain electrode of a field effect transistor Q1 in the heating sheet drive circuit.

The front end of the scissors body 21 is provided with an indicator light 10, and the indicator light 10 is connected to one output pin of the single chip microcomputer U1 through a resistor R9.

One input pin of the single chip microcomputer U1 is connected to a potentiometer VER1 in a blade heating temperature adjustment circuit.

A control method of the blade heatable electric scissors includes the following steps:
step 1, firstly, arranging a heating sheet 4 and a temperature sensor 5 on a first blade 2, rotating around a scissors shaft 6, at a front end of a scissors body 21 of the electric scissors 1; embedding the heating sheet 4 tightly into a blade body of the first blade 2; arranging the temperature sensor 5 near the heating sheet 4 so as to be tightly attached to the blade body; and
arranging a power circuit, wherein the power circuit provides three types of power for the electric scissors, a first type is DC3V or DC5V power for operation of a single chip microcomputer U1, a blade heating temperature adjustment circuit, a heating sheet drive circuit and a blade temperature detection circuit; a second type is DC12V power for operation of a shearing electric motor in the scissors body 21; and a third type is a VCC of DC28-60V power for operation of the heating sheet 4;
step 2, re-arranging a single chip microcomputer U1; and loading a starting preheating program module 101, a blade temperature detection program module 102, a shearing time setting program module 103, a PWM drive program module 104, an operation state indicator light program module 105, a temperature over-limit alarm program module 106, a reference temperature correction program module 107 and a shearing early-heating program module 108 in a program storer 100 of the single chip microcomputer U1, wherein each program module may be loaded and run by a processor 110;
step 3, then connecting the heating sheet 4 and the temperature sensor 5 to the heating sheet drive circuit and the blade temperature detection circuit through a conduction cable 20 respectively, wherein a drive end PWM1H of the heating sheet drive circuit is connected to one output pin of the single chip microcomputer U1, and an output end TEM of the blade temperature detection circuit is connected to one input pin of the single chip microcomputer U1;
step 4, next arranging the blade heating temperature adjustment circuit, wherein a slide point of a potentiometer VER1 in the circuit is connected to one input pin of the single chip microcomputer U1;
step 5, switching on a starting switch 11 on the scissors body 21 when shearing is ready to start, running the starting preheating program module 101, the blade temperature detection program module 102, the shearing time setting program module 103 and the operation state indicator light program module 105 by the single chip microcomputer U1, at this moment, heating the first blade 2 to a preheated state, detecting a preheated temperature by the blade temperature detection program module 102, and determining whether shearing may be performed according to a light-up state of the indicator light 10;
step 6, pulling a trigger 9 when shearing is performed to trigger a first pin ED of the single chip microcomputer U1, running the shearing early-heating program module 108 by the single chip microcomputer U1, rapidly heating the first blade 2 to a shearing high temperature state, ejecting a shearing drive rod 7 under drive of the shearing electric motor according to control of the shearing time setting program module 103, driving the first blade 2 to perform shearing by a shearing drive shaft 8, and after shearing is completed, stopping the shearing high temperature state of the first blade 2 by the shearing time setting program module 103 and returning to a preheated state;
step 7, when a reference of the preheated state and a reference of the shearing high temperature state need to be adjusted in a use process due to a geographic latitude difference, an environment temperature difference and a sheared material difference, rotating the potentiometer VER1 in the blade heating temperature adjustment circuit, running the reference temperature correction program module 107, and raising or lowering the reference; and
step 8, under the condition that a heating temperature exceeds a maximum limit during a use process, starting the temperature over-limit alarm program module 106, rapidly flashing the indicator light 10 and stopping operation of the electric scissors.

In the above method, the drive end PWM1H of the heating sheet drive circuit is connected to one output pin of the single chip microcomputer U1, the pin outputs a PWM drive waveform generated by the PWM drive program module 104, the waveform varies in duty ratio, a field effect transistor Q1 varies in conduction degree accordingly, and the heating sheet 4 varies in heated degree.

In the above method, the output end TEM of the blade temperature detection circuit is connected to one input pin of the single chip microcomputer U1, the pin inputs a voltage induced by an upper end of the temperature sensor 5, the first blade 2 varies in temperature, the voltage induced by the upper end of the temperature sensor 5 varies accordingly, and the voltage is converted into a digital signal through an A/D converter inside the pin and the blade temperature detection program module 102 for control.

In the above method, the blade heating temperature adjustment circuit is connected to one input pin of the single chip microcomputer U1, the pin inputs a potential of a midpoint of the potentiometer VER1, and the potential is converted into a digital signal through the A/D converter inside the pin and the reference temperature correction program module 107 for reference temperature adjustment.

In the above method, when the VCC voltage of the DC28-60V power for the operation of the heating sheet 4 varies, and the preheated temperature is set during initial starting, the VCC voltage of the power may be indirectly detected through the starting preheating program module 101 and the blade temperature detection program module 102, and the PWM drive program module 104 is started to correct a duty ratio of a PWM signal.

As shown in Fig. 2, a second blade 3 is a stationary blade, the first blade 2 moves from top to bottom to shear a branch shown in Fig. 2, in a shearing process, a branch on the right side in the figure is to be preserved, a cut is ironed by a heat conduction region of the first blade 2 and is disinfected and sterilized, such that it is necessary to pay attention to a direction of shearing when the scissors of the present invention are used.

When the first embodiment of the present invention is used, a power switch 17 on a battery 16 is switched on to power up the controller 13, the starting switch 11 on the electric scissors body 21 is switched on, the electric scissors 1 enter into an operation preparing state, a user observes the light-up state of the indicator light 10, and may perform shearing, high temperature disinfection and sterilization operation when determining that the electric scissors 1 get ready, and two functions are completed in one operation process, thereby greatly improving efficiency.

In the first embodiment, a battery capacity indication window 18 is arranged on the battery 16, on which battery remaining capacity is displayed.

Since the geographic latitude and the environment temperature are different, a temperature reference of the preheated state is selected from 70°C-90°C, a temperature reference of the shearing high temperature state is selected from 120°C-150°C, and the user may determine an optimal reference parameter only through two trials.

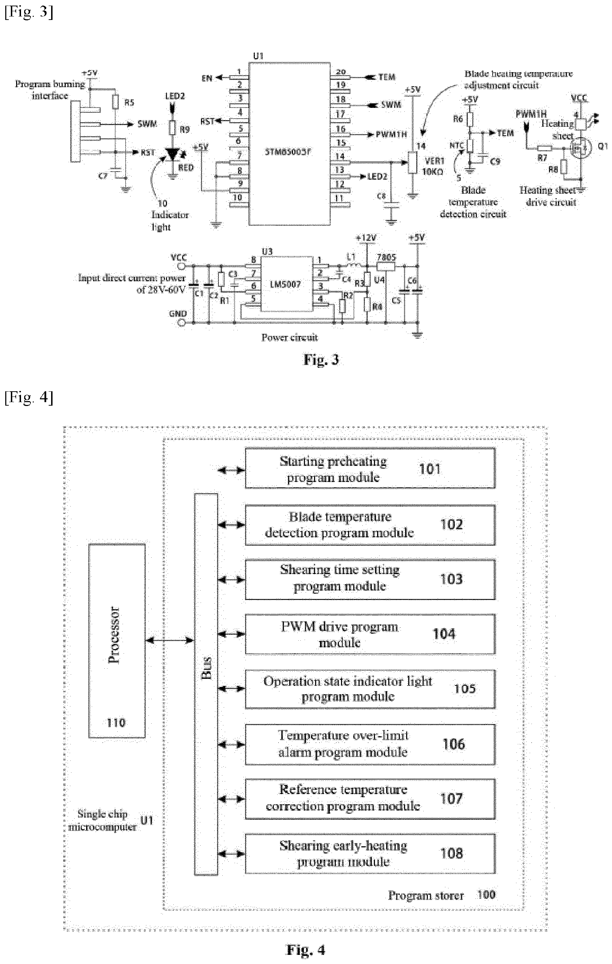

A high temperature over-limit threshold is selected from 200°C-250°C, the parameters above are pre-written into the program module, the user rotates the VER1 to change an input level of a 14th pin of the single chip microcomputer U1 in Fig. 3, a digital voltage after A/D conversion is read by the reference temperature correction program module 107 and a new temperature reference is determined.

STM8S003F is selected for the single chip microcomputer U1 in Fig. 3, and may be replaced with single chip microcomputers of many models, which have a similar price and basically identical functional parameters, for example, STC15W408S, and are not enumerated herein.

The scope of the present invention is defined by the appended claims rather than the above-mentioned description, and therefore it is intended that all changes which fall within the meaning and scope of equivalent elements of the claims are embraced in the present invention. Any reference sign in the claims should not be construed as limiting the related claims.

## Claims

1. Blade heatable electric scissors, wherein the electric scissors (1) comprise a scissors body (21), a first blade (2) is arranged at a front end of the scissors body (21), and a heating sheet (4) and a temperature sensor (5) are arranged at the first blade (2); and the heating sheet (4) and the temperature sensor (5) are connected to a heating sheet drive circuit and a blade temperature detection circuit each through a conduction cable (20) respectively, a drive end (PWM1H) of the heating sheet drive circuit being connected to one pin of a single chip microcomputer (U1), and an output end (TEM) of the blade temperature detection circuit being connected to another pin of the single chip microcomputer (U1).

2. The blade heatable electric scissors according to claim 1, **characterized in that** two leads in the conduction cable (20) are connected to two electrodes of the temperature sensor (5), one, connected to an upper end of the temperature sensor (5), of the leads is finally connected to a resistor (R6), a junction serves the output end (TEM) of the blade temperature detection circuit, and the other one, connected to a lower end of the temperature sensor (5), of the leads is finally connected to a ground wire of the blade temperature detection circuit.

3. The blade heatable electric scissors according to claim 1, **characterized in that** two leads in the conduction cable (20) are connected to two electrodes of the heating sheet (4), one, connected to an upper end of the heating sheet (4), of the leads is finally connected to a voltage of the common collector (VCC) of a power circuit, and the other one, connected to a lower end of the heating sheet (4), of the leads is finally connected to a drain electrode of a field effect transistor (Q1) in the heating sheet drive circuit.

4. The blade heatable electric scissors according to claim 1, **characterized in that** an indicator light (10) is arranged at the front end of the scissors body (21), and the indicator light (10) is connected to one output pin of the single chip microcomputer (U1) through a resistor (R9).

5. The blade heatable electric scissors according to claim 1, **characterized in that** one input pin of the single chip microcomputer (U1) is connected to a potentiometer (VER1) in a blade heating temperature adjustment circuit.

6. A control method for blade heatable electric scissors, wherein the control method comprises the following steps:
step 1, firstly, arranging a heating sheet (4) and a temperature sensor (5) on a first blade (2), rotating around a scissors shaft (6), at a front end of a scissors body (21) of the electric scissors (1); embedding the heating sheet (4) tightly into a blade body of the first blade (2); arranging the temperature sensor (5) near the heating sheet (4) so as to be tightly attached to the blade body; and
arranging a power circuit, wherein the power circuit provides three types of power for the electric scissors, a first type of power is DC3V or DC5V power for operation of a single chip microcomputer (U1), , a blade heating temperature adjustment circuit, a heating sheet drive circuit and a blade temperature detection circuit, a second type of power is DC12V power for operation of a shearing electric motor in the scissors body (21), and a third type of power is a (VCC) DC28-60V power for operation of the heating sheet (4);
step 2, re-arranging a single chip microcomputer (U1);
and loading a starting preheating program module (101), a blade temperature detection program module (102), a shearing time setting program module (103), a (PWM) drive program module (104), an operation state indicator light program module (105), a temperature over-limit alarm program module (106), a reference temperature correction program module (107) and a shearing early-heating program module (108) in a program storer (100) of the single chip microcomputer (U1),
wherein each program module may be loaded and run by a processor (110);
step 3, then connecting the heating sheet (4) and the temperature sensor (5) to the heating sheet drive circuit and the blade temperature detection circuit each through a conduction cable (20) respectively, wherein a drive end (PWM1H) of the heating sheet drive circuit is connected to one output pin of the single chip microcomputer (U1), and an output end (TEM) of the blade temperature detection circuit is connected to one input pin of the single chip microcomputer (U1);
step 4, next arranging the blade heating temperature adjustment circuit, wherein a slide point of a potentiometer (VER1) in the circuit is connected to one input pin of the single chip microcomputer (U1);
step 5, switching on a starting switch (11) on the scissors body (21) when shearing is ready to start, running the starting preheating program module (101), the blade temperature detection program module (102), the shearing time setting program module (103) and the operation state indicator light program module (105) by the single chip microcomputer (U1), , at this moment, heating the first blade (2) to a preheated state, detecting a preheated temperature by the blade temperature detection program module (102), and determining whether shearing may be performed according to a light-up state of the indicator light (10);
step 6, pulling a trigger (9) when shearing is performed to trigger a first pin (ED) of the single chip microcomputer (U1), running the shearing early-heating program module (108) by the single chip microcomputer U1, rapidly heating the first blade (2) to a shearing high temperature state, ejecting a shearing drive rod (7) under drive of the shearing electric motor according to control of the shearing time setting program module (103), driving the first blade (2) to perform shearing by a shearing drive shaft (8), and after shearing is completed, stopping the shearing high temperature state of the first blade (2) by the shearing time setting program module (103) and returning to a preheated state;
step 7, when a reference of the preheated state and a reference of the shearing high temperature state need to be adjusted in a use process due to a geographic latitude difference, an environment temperature difference and a sheared material difference, rotating the potentiometer (VER 1) in the blade heating temperature adjustment circuit, running the reference temperature correction program module (107), and raising or lowering the reference; and
step 8, under the condition that a heating temperature exceeds a maximum limit during a use process, starting the temperature over-limit alarm program module (106), rapidly flashing the indicator light (10) and stopping operation of the electric scissors.

7. The control method for the blade heatable electric scissors according to claim 6, **characterized in that** the drive end (PWM1H) of the heating sheet drive circuit is connected to one output pin of the single chip microcomputer (U1), the pin outputs a (PWM) drive waveform generated by the (PWM) drive program module (104), the waveform varies in duty ratio, a field effect transistor (Q1) 1 varies in conduction degree accordingly, and the heating sheet (4) varies in heated degree.

8. The control method for the blade heatable electric scissors according to claim 6, **characterized in that** the output end (TEM) of the blade temperature detection circuit is connected to one input pin of the single chip microcomputer (U1), the pin inputs a voltage induced by an upper end of the temperature sensor (5), the first blade (2) varies in temperature, the voltage induced by the upper end of the temperature sensor (5) varies accordingly, and the voltage is converted into a digital signal through an A/D converter inside the pin and the blade temperature detection program module (102) for control.

9. The control method for the blade heatable electric scissors according to claim 6, **characterized in that** the blade heating temperature adjustment circuit is connected to one input pin of the single chip microcomputer (U1), , the pin inputs a potential of a midpoint of the potentiometer (VER1), and the potential is converted into a digital signal through an A/D converter inside the pin and the reference temperature correction program module (107) for reference temperature adjustment.

10. The control method for the blade heatable electric scissors according to claim 6, **characterized in that** when the (VCC) voltage of the DC28-60V power for the operation of the heating sheet (4) varies, and the preheated temperature is set during initial starting, the (VCC) voltage of the power may be indirectly detected through the starting preheating program module (101) and the blade temperature detection program module (102), and the (PWM) drive program module (104) is started to correct a duty ratio of a (PWM) signal.

## Patentansprüche

1. Elektrische Schere mit beheizbaren Klingen, wobei die elektrische Schere (1) einen Scherenkörper (21) umfasst, eine erste Klinge (2) an einem vorderen Ende des Scherenkörpers (21) angeordnet ist und ein Heizblatt (4) und ein Temperatursensor (5) an der ersten Klinge (2) angeordnet sind und das Heizblatt (4) und der Temperatursensor (5) jeweils durch ein Leitungskabel (20) mit einer Heizblattantriebsschaltung beziehungsweise einer Klingentemperaturerkennungsschaltung verbunden sind, ein Antriebsende (PWM1H) der Heizblattantriebsschaltung mit einem Stift eines Ein-Chip-Mikrocomputers (U1) verbunden ist und ein Ausgangsende (TEM) der Klingentemperaturerkennungsschaltung mit einem anderen Stift des Ein-Chip-Mikrocomputers (U1) verbunden ist.

2. Elektrische Schere mit beheizbaren Klingen nach Anspruch 1, **dadurch gekennzeichnet, dass** zwei Litzen in dem Leitungskabel (20) mit zwei Elektroden des Temperatursensors (5) verbunden sind, wobei eine, mit einem oberen Ende des Temperatursensors (5) verbundene der Litzen letztlich mit einem Widerstand (R6) verbunden ist, ein Knotenpunkt das Ausgangsende (TEM) der Klingentemperaturerkennungsschaltung bedient und die andere, mit einem unteren Ende des Temperatursensors (5) verbundene der Litzen letztlich mit einem Schutzleiter der Klingentemperaturerkennungsschaltung verbunden ist.

3. Elektrische Schere mit beheizbaren Klingen nach Anspruch 1, **dadurch gekennzeichnet, dass** zwei Litzen in dem Leitungskabel (20) mit zwei Elektroden des Heizblattes (4) verbunden sind, wobei eine, mit einem oberen Ende des Heizblattes (4) verbundene der Litzen letztlich mit einer VCC ("voltage of the common collector") einer Leistungsschaltung verbunden ist und die andere, mit einem unteren Ende des Heizblattes (4) verbundene der Litzen letztlich mit einer Drain-Elektrode eines Feldeffekttransistors (Q1) in der Heizblattantriebsschaltung verbunden ist.

4. Elektrische Schere mit beheizbaren Klingen nach Anspruch 1, **dadurch gekennzeichnet, dass** am vorderen Ende des Scherenkörpers (21) eine Anzeigeleuchte (10) angeordnet ist und die Anzeigeleuchte (10) durch einen Widerstand (R9) mit einem Ausgangsstift des Ein-Chip-Mikrocomputers (U1) verbunden ist.

5. Elektrische Schere mit beheizbaren Klingen nach Anspruch 1, **dadurch gekennzeichnet, dass** ein Eingangsstift des Ein-Chip-Mikrocomputers (U1) mit einem Potentiometer (VER1) in einer Schaltung zum Justieren der Klingenheiztemperatur verbunden ist.

6. Steuerverfahren für eine elektrische Schere mit beheizbaren Klingen, wobei das Steuerverfahren die folgenden Schritte umfasst:
Schritt 1: zuerst Anordnen eines Heizblattes (4) und eines Temperatursensors (5) an einer ersten Klinge (2), Drehen um eine Scherenwelle (6) an einem vorderen Ende eines Scherenkörpers (21) der elektrischen Schere (1); enganliegendes Einbetten des Heizblattes (4) in einen Klingenkörper der ersten Klinge (2), Anordnen des Temperatursensors (5) nahe dem Heizblatte (4) derart, dass es enganliegend an dem Klingenkörper angebracht ist, und
Anordnen einer Leistungsschaltung, wobei die Leistungsschaltung drei Arten von Leistung für die elektrische Schere bereitstellt, wobei eine erste Art der Leistung DC3V- oder DC5V-Leistung für den Betrieb eines Ein-Chip-Mikrocomputers (U1), einer Schaltung zum Justieren der Klingenheiztemperatur, einer Heizblattantriebsschaltung und einer Klingentemperaturerkennungsschaltung ist, eine zweite Art der Leistung DC12V-Leistung für den Betrieb eines Scherelektromotors in dem Scherenkörper (21) ist und eine dritte Art der Leistung eine (VCC) DC28-60V-Leistung für den Betrieb des Heizblattes (4) ist,
Schritt 2: Neuanordnen eines Ein-Chip-Mikrocomputers (U1) und Laden eines Programmmoduls (101) zum Starten des Vorheizens, eines Programmmoduls (102) für die Klingentemperaturerkennung, eines Programmmoduls (103) zum Einstellen der Scherzeit, eines Programmmoduls (104) für den (PWM)-Antrieb, eines Programmmoduls (105) für die Betriebzustandsanzeigeleuchte, eines Programmoduls (106) für einen Temperaturobergrenzenalarm, eines Programmoduls (107) für eine Referenztemperaturkorrektur und eines Programmoduls (108) für ein frühes Heizen zum Scheren in einer Programmspeichereinrichtung (100) des Ein-Chip-Mikrocomputers (U1), wobei jedes Programmodul von einem Prozessor (110) geladen und abgearbeitet werden kann,
Schritt 3: dann Verbinden des Heizblattes (4) und des Temperatursensors (5) mit der Heizblattantriebsschaltung und der Klingentemperaturerkennungsschaltung, jeweils durch ein entsprechendes Leitungskabel (20), wobei ein Antriebsende (PWM1H) der Heizblattantriebsschaltung mit einem Ausgangsstift eines Ein-Chip-Mikrocomputers (U1) verbunden wird und ein Ausgangsende (TEM) der Klingentemperaturerkennungsschaltung mit einem Eingangsstift des Ein-Chip-Mikrocomputers (U1) verbunden wird,
Schritt 4: als Nächstes Anordnen der Schaltung zum Justieren der Klingenheiztemperatur, wobei ein Schiebepunkt eines Potentiometers (VER1) in der Schaltung mit einem Eingangsstift des Ein-Chip-Mikrocomputers (U1) verbunden wird,
Schritt 5: Anschalten eines Startschalters (11) an dem Scherenkörper (21), wenn das Scheren startbereit ist, Abarbeiten des Programmmoduls (101) zum Starten des Vorheizens, des Programmmoduls (102) für die Klingentemperaturerkennung, des Programmoduls (103) zum Einstellen der Scherzeit und des Programmmoduls (105) für die Betriebzustandsanzeigeleuchte durch den Ein-Chip-Mikrocomputer (U1), zu diesem Zeitpunkt Erwärmen der ersten Klinge (2) in einen vorgeheizten Zustand,
Erkennen einer vorgeheizten Temperatur durch das Programmmodul (102) für die Klingentemperaturerkennung und Bestimmen, ob das Scheren durchgeführt werden kann, gemäß einem Leuchtzustand der Anzeigeleuchte (10),
Schritt 6: Ziehen eines Auslösehebels (9), wenn das Scheren durchgeführt wird, um einen ersten Stift (ED) des Ein-Chip-Mikrocomputers (U1) auszulösen, Abarbeiten des Programmoduls (108) für ein frühes Heizen zum Scheren durch den Ein-Chip-Mikrocomputers (U1), schnelles Erwärmen der ersten Klinge (2) auf einen Zustand hoher Scher-Temperatur, Ausfahren eines Scherantriebsstabes (7) unter dem Antrieb des Scherelektromotors gemäß der Steuerung des Programmmoduls (103) zum Einstellen der Scherzeit, Antreiben der ersten Klinge (2) zum Durchführen des Scherens durch eine Scherantriebswelle (8) und nach Abschluss des Scherens Stoppen des Zustandes hoher Scher-Temperatur der ersten Klinge (2) durch das Programmmodul (103) zum Einstellen der Scherzeit und Rückkehren in einen vorgeheizten Zustand,
Schritt 7: wenn eine Referenz des vorgeheizten Zustandes und eine Referenz des Zustandes hoher Scher-Temperatur in einem Verwendungsprozess wegen einer Veränderung des geografischen Breitengrades, einer Veränderung der Umgebungstemperatur oder eines Unterschieds im gescherten Materials justiert werden muss, Drehen des Potentiometers (VER1) in der Schaltung zum Justieren der Klingenheiztemperatur, Abarbeiten des Programmoduls (107) für eine Referenztemperaturkorrektur und Anheben oder Absenken der Referenz und
Schritt 8: unter der Bedingung, dass eine Heiztemperatur während eines Verwendungsprozesses eine Maximalgrenze übersteigt, Starten des Programmoduls (106) für einen Temperaturobergrenzenalarm, schnelles Aufleuchten-Lassen der Anzeigeleuchte (10) und Stoppen des Betriebes der elektrischen Schere.

7. Steuerverfahren für die elektrische Schere mit beheizbaren Klingen nach Anspruch 6, **dadurch gekennzeichnet, dass** das Antriebsende (PWM1H) der Heizblattantriebsschaltung mit einem Ausgangsstift des Ein-Chip-Mikrocomputers (U1) verbunden wird, der Stift eine (PWM)-Antriebswellenform ausgibt, die durch das Programmmodul (104) für den (PWM)-Antrieb erzeugt wird, das Taktverhältnis der Wellenform variiert, ein Feldeffekttransistor (Q1) dementsprechend im Leitfähigkeitsgrad variiert und der Erwärmungsgrad des Heizblattes (4) variiert.

8. Steuerverfahren für die elektrische Schere mit beheizbaren Klingen nach Anspruch 6, **dadurch gekennzeichnet, dass** das Ausgangsende (TEM) der Klingentemperaturerkennungsschaltung mit einem Eingangsstift des Ein-Chip-Mikrocomputers (U1) verbunden wird, der Stift eine Spannung eingibt, die durch ein oberes Ende des Temperatursensors (5) induziert wird, die Temperatur der ersten Klinge (2) variiert, dementsprechend die durch das obere Ende des Temperatursensors (5) induzierte Spannung variiert und die Spannung durch einen Analog-Digital-Wandler im Inneren des Stifts und des Programmmoduls (102) für die Klingentemperaturerkennung zur Steuerung in ein digitales Signal umgewandelt wird.

9. Steuerverfahren für die elektrische Schere mit beheizbaren Klingen nach Anspruch 6, **dadurch gekennzeichnet, dass** die Schaltung zum Justieren der Klingenheiztemperatur mit einem Eingangsstift des Ein-Chip-Mikrocomputers (U1) verbunden ist, der Stift ein Potential eines Mittelpunktes des Potentiometers (VER1) eingibt und das Potential durch einen Analog-Digital-Wandler im Inneren des Stifts und das Programmodul (107) für eine Referenztemperaturkorrektur zur Justierung der Referenztemperatur in ein digitales Signal umgewandelt wird.

10. Steuerverfahren für die elektrische Schere mit beheizbaren Klingen nach Anspruch 6, **dadurch gekennzeichnet, dass**, wenn die (VCC)-Spannung der DC28-60V-Leistung für den Betrieb des Heizblattes (4) variiert und die Vorheiztemperatur während des anfänglichen Startens eingestellt wird, die (VCC)-Spannung der Leistung indirekt durch das Programmmodul (101) zum Starten des Vorheizens und das Programmmodul (102) für die Klingentemperaturerkennung erkannt werden kann und das Programmmodul (104) für den (PWM)-Antrieb gestartet wird, um ein Taktverhältnis eines (PWM)-Signals zu korrigieren.

## Revendications

1. Ciseaux électriques chauffants à lames, dans lesquels les ciseaux électriques (1) comprennent un corps de ciseaux (21), une première lame (2) est disposée à une extrémité avant du corps de ciseaux (21), et une feuille chauffante (4) et un capteur de température (5) sont disposés à la première lame (2) ; et la feuille chauffante (4) et le capteur de température (5) sont connectés à un circuit de commande de feuille chauffante et à un circuit de détection de température de lame, chacun par l'intermédiaire d'un câble de conduction (20), respectivement, une borne de commande (PWM1H) du circuit de commande de feuille chauffante étant connectée à une broche d'un micro-ordinateur monopuce (U1), et une borne de sortie (TEM) du circuit de détection de température de lame étant connectée à une autre broche du micro-ordinateur monopuce (U1) .

2. Ciseaux électriques chauffants à lames selon la revendication 1, **caractérisés par le fait que** deux conducteurs dans le câble de conduction (20) sont connectés à deux électrodes du capteur de température (5), l'un, connecté à une extrémité supérieure du capteur de température (5), des conducteurs est au final connecté à une résistance (R6), une jonction servant de borne de sortie (TEM) du circuit de détection de température de lame, et l'autre, connecté à une extrémité inférieure du capteur de température (5), des conducteurs est au final connecté à un fil de masse du circuit de détection de température de lame.

3. Ciseaux électriques chauffants à lames selon la revendication 1, **caractérisés par le fait que** deux conducteurs dans le câble de conduction (20) sont connectés à deux électrodes de la feuille chauffante (4), l'un, connecté à une extrémité supérieure de la feuille chauffante (4), des conducteurs est au final connecté à une tension du collecteur commun (VCC) d'un circuit d'alimentation, et l'autre, connecté à une extrémité inférieure de la feuille chauffante (4), des conducteurs est au final connecté à une électrode de drain d'un transistor à effet de champ (Q1) dans le circuit de commande de feuille chauffante.

4. Ciseaux électriques chauffants à lames selon la revendication 1, **caractérisés par le fait qu'**un témoin lumineux (10) est disposé à l'extrémité avant du corps de ciseaux (21), et le témoin lumineux (10) est connecté à une broche de sortie du micro-ordinateur monopuce (U1) par l'intermédiaire d'une résistance (R9).

5. Ciseaux électriques chauffants à lames selon la revendication 1, **caractérisés par le fait qu'**une broche d'entrée du micro-ordinateur monopuce (U1) est connectée à un potentiomètre (VER1) dans un circuit de réglage de température de chauffage de lame.

6. Procédé de commande pour des ciseaux électriques chauffants à lames, le procédé de commande comprenant les étapes suivantes :
étape 1, tout d'abord, disposer une feuille chauffante (4) et un capteur de température (5) sur une première lame (2), tournant autour d'un arbre de ciseaux (6), à une extrémité avant d'un corps de ciseaux (21) des ciseaux électriques (1) ; implanter la feuille chauffante (4) de manière serrée dans un corps de lame de la première lame (2) ; disposer le capteur de température (5) près de la feuille chauffante (4) de façon à être fermement fixé au corps de lame ; et
disposer un circuit d'alimentation, le circuit d'alimentation fournissant trois types d'alimentation pour les ciseaux électriques, un premier type d'alimentation étant une alimentation CC3V ou CC5V pour le fonctionnement d'un micro-ordinateur monopuce (U1), d'un circuit de réglage de température de chauffage de lame, d'un circuit de commande de feuille chauffante et d'un circuit de détection de température de lame, un deuxième type d'alimentation étant une alimentation CC12V pour le fonctionnement d'un moteur électrique de cisaillement dans le corps de ciseaux (21), et un troisième type d'alimentation étant une alimentation (VCC) CC28-60V pour le fonctionnement de la feuille chauffante (4) ;
étape 2, re-disposer un micro-ordinateur monopuce (U1) ; et charger un module de programme de préchauffage de démarrage (101), un module de programme de détection de température de lame (102), un module de programme de réglage de temps de cisaillement (103), un module de programme de commande (PWM) (104), un module de programme de témoin lumineux d'état de fonctionnement (105), un module de programme d'alarme de dépassement de limite de température (106), un module de programme de correction de température de référence (107) et un module de programme de chauffage précoce de cisaillement (108) dans un dispositif de stockage de programmes (100) du micro-ordinateur monopuce (U1), chaque module de programme pouvant être chargé et exécuté par un processeur (110) ;
étape 3, connecter ensuite la feuille chauffante (4) et le capteur de température (5) au circuit de commande de feuille chauffante et au circuit de détection de température de lame, chacun par l'intermédiaire d'un câble de conduction (20), respectivement, une borne de commande (PWM1H) du circuit de commande de feuille chauffante étant connectée à une broche de sortie du micro-ordinateur monopuce (U1), et une borne de sortie (TEM) du circuit de détection de température de lame étant connectée à une broche d'entrée du micro-ordinateur monopuce (U1) ;
étape 4, disposer ensuite le circuit de réglage de température de chauffage de lame, un point de glissement d'un potentiomètre (VER1) dans le circuit étant connecté à une broche d'entrée du micro-ordinateur monopuce (U1) ;
étape 5, mettre en marche un interrupteur de démarrage (11) sur le corps de ciseaux (21) lorsqu'un cisaillement est prêt à commencer, exécuter le module de programme de préchauffage de démarrage (101), le module de programme de détection de température de lame (102), le module de programme de réglage de temps de cisaillement (103) et le module de programme de témoin lumineux d'état de fonctionnement (105) par le micro-ordinateur monopuce (U1), à ce moment, chauffer la première lame (2) à un état préchauffé, détecter une température préchauffée par le module de programme de détection de température de lame (102), et déterminer si un cisaillement peut être réalisé selon un état d'allumage du témoin lumineux (10) ;
étape 6, tirer une gâchette (9) lorsqu'un cisaillement est réalisé pour activer une première broche (ED) du micro-ordinateur monopuce (U1), exécuter le module de programme de chauffage précoce de cisaillement (108) par le micro-ordinateur monopuce (U1), chauffer rapidement la première lame (2) jusqu'à un état de haute température de cisaillement, éjecter une tige de commande de cisaillement (7) sous l'effet de la commande du moteur électrique de cisaillement selon une commande du module de programme de réglage de temps de cisaillement (103), amener la première lame (2) à réaliser un cisaillement par un arbre de commande de cisaillement (8) et, après que le cisaillement est terminé, arrêter l'état de haute température de cisaillement de la première lame (2) par le module de programme de réglage de temps de cisaillement (103) et revenir à un état préchauffé ;
étape 7, lorsqu'une référence de l'état préchauffé et une référence de l'état de haute température de cisaillement doivent être ajustées dans un processus d'utilisation en raison d'une différence de latitude géographique, d'une différence de température d'environnement et d'une différence de matériau cisaillé, faire tourner le potentiomètre (VER1) dans le circuit de réglage de température de chauffage de lame, exécuter le module de programme de correction de température de référence (107), et augmenter ou diminuer la référence ; et
étape 8, à la condition qu'une température de chauffage dépasse une limite maximale pendant un processus d'utilisation, démarrer le module de programme d'alarme de dépassement de température (106), faire clignoter rapidement le témoin lumineux (10) et arrêter le fonctionnement des ciseaux électriques.

7. Procédé de commande pour les ciseaux électriques chauffants à lames selon la revendication 6, **caractérisé par le fait que** la borne de commande (PWM1H) du circuit de commande de feuille chauffante est connectée à une broche de sortie du micro-ordinateur monopuce (U1), la broche délivrant une forme d'onde de commande (PWM) générée par le module de programme de commande (PWM) (104), le rapport cyclique de la forme d'onde varie, le degré de conduction d'un transistor à effet de champ (Q1) varie en conséquence, et le degré de chauffage de la feuille chauffante (4) varie.

8. Procédé de commande pour les ciseaux électriques chauffants à lames selon la revendication 6, **caractérisé par le fait que** la borne de sortie (TEM) du circuit de détection de température de lame est connectée à une broche d'entrée du micro-ordinateur monopuce (U1), la broche entrant une tension induite par une extrémité supérieure du capteur de température (5), la température de la première lame (2) varie, la tension induite par l'extrémité supérieure du capteur de température (5) varie en conséquence, et la tension est convertie en un signal numérique par un convertisseur A/N à l'intérieur de la broche et du module de programme de détection de température de lame (102) pour la commande.

9. Procédé de commande pour les ciseaux électriques chauffants à lames selon la revendication 6, **caractérisé par le fait que** le circuit de réglage de température de chauffage de lame est connecté à une broche d'entrée du micro-ordinateur monopuce (U1), la broche entrant un potentiel d'un point médian du potentiomètre (VER1), et le potentiel est converti en un signal numérique par un convertisseur A/N à l'intérieur de la broche et du module de programme de correction de température de référence (107) pour un réglage de température de référence.

10. Procédé de commande pour les ciseaux électriques chauffants à lames selon la revendication 6, **caractérisé par le fait que**, lorsque la tension (VCC) de l'alimentation DC28-60V pour le fonctionnement de la feuille chauffante (4) varie, et que la température de préchauffage est définie pendant un démarrage initial, la tension (VCC) de l'alimentation peut être indirectement détectée par l'intermédiaire du module de programme de préchauffage de démarrage (101) et du module de programme de détection de température de lame (102), et le module de programme de commande (PWM) (104) est démarré pour corriger un rapport cyclique d'un signal (PWM).
